# EUROPEAN PATENT SPECIFICATION

(11) **EP 4 056 027 B1**
(45) Date of publication and mention of the grant of the patent: **25.02.2026**
(21) Application number: 22161695.6
(22) Date of filing: 11.03.2022
(51) Int. Cl.: A01G 3/00

(54) **A HEAVY-DUTY SHREDDER**
HOCHLEISTUNGSZERKLEINERER
DÉCHIQUETEUSE À USAGE INDUSTRIEL

(30) Priority: 11.03.2021 IT 202100005765
(43) Date of publication of application: 14.09.2022
(73) Proprietor: Dragone S.r.l., 14054 Castagnole Delle Lanze (AT) (IT)
(72) Inventor: BARBERO, Simone, 14054 CASTAGNOLE DELLE LANZE (AT) (IT)
(74) Representative: Studio Torta S.p.A.

(56) References cited:
- EP-A1- 2 818 248
- EP-B1- 3 315 201
- DE-T5- 112011 100 567
- DE-U1- 202016 005 660
- GB-A- 2 300 131
- IT-A1- 201900 006 240
- JP-A- 2015 077 542
- US-A1- 2011 168 822
- US-A1- 2017 079 219

## Description

### TECHNICAL FIELD

The present invention relates to a heavy-duty shredder, in particular for use in forestry.

### STATE OF THE PRIOR ART

Document JP5873061 B2 discloses a stationary shedder comprising a casing 10 having an input port 10a and a discharge port 10b for objects to be processed, of a shredder 1. The shredder comprises a shredding rotor 2 having a shredding blade 4, and a conveyance rotor 3 having an engaging blade 5 so that the shredding rotor 2 is located below the conveyance rotor 3 in a vertical direction. The shredding rotor 2 and the conveyance rotor 3 are rotatably driven in directions opposite to each other so that the shredding blade 4 and the engaging blade 5 go from the input port 10a toward the discharge port 10b through a part between the rotors. The shredding rotor and the conveyance rotor are driven so that the peripheral speed of the shredding blade 4 of the shredding rotor 2 is equal to or greater than sixteen times the peripheral speed of the engaging blade 5 of the conveyance rotor 3 and less than or equal to twenty times the peripheral speed of the engaging blade 5 of the conveyance rotor 3, thus an object to be processed is effectively shredded by the shredding blade 4, being held by the engaging blade 5.

Heavy-duty shredders are used in forestry and more generally in the shredding of particularly resistant organic material. Forestry organic material to be shredded ranges from very small sizes, such as small branches, to very large sizes, such as trunks or trunk remains.

Heavy-duty shredders of a known type are used for shredding organic material of any size, so the final result is not particularly satisfactory when the size of the organic material varies within a very wide range.

### OBJECT OF THE INVENTION

One object of the present invention is to provide a heavy-duty shredder which can mitigate the drawbacks of the prior art.

In accordance with the present invention, there is provided a heavy-duty shredder, in particular for use in forestry, the shredder comprising:
- a frame;
- a rotor rotatably mounted on the frame about an axis of rotation and comprising:
   (i) a drum coaxial with the axis of rotation;
   (ii) a plurality of annular discoidal sectors extending around the drum, integral with the drum and distributed along the axis of rotation so as to form annular cavities between adjacent annular discoidal sectors;
   the heavy-duty shredder being characterized by comprising a connection for connecting the shredder to a vehicle and a rotor comprising:
   (iii) a plurality of first teeth integral with the drum and each of them comprising a base attached to the drum and an insert, which has a cutting profile and is selectively mountable in a seat of the respective base and arranged in the annular cavities between two adjacent discoidal annular sectors; and
   (iv) a plurality of second teeth integral with the drum and each of them comprising a base attached to the drum and an insert, which has a cutting profile and is selectively mountable in a seat of the respective base integral with the drum and aligned with the annular sectors in a circumferential direction.

In this way, each first tooth has a working depth for material having dimensions exceeding the distance between two adjacent annular discoidal sectors equal to the portion of the first tooth which protrudes from the adjacent annular discoidal sectors. In contrast, the working depth of each first tooth is equal to the total height of the first tooth with respect to the drum for material which can be housed between two adjacent annular sectors.

In general, the working depth of each second tooth is equal to the portion of the second tooth which protrudes from the respective annular discoidal sector. For material with dimensions which can be housed in the annular channel, each tooth only works for that part of the second tooth protruding into the annular channel.

This configuration allows different-sized organic material to be shredded in an effective and quick manner, and at the same time, the inertial speed of the drum not to be reduced excessively thanks to the limitation of the working depth of the second teeth and/or the working width of the second teeth.

In particular, each first tooth is arranged in a respective annular cavity.

The bijective mapping between the first teeth and annular channels allows only one first tooth to act along each annular cavity.

In particular, each annular discoidal sector has an interruption and each second tooth is arranged in an interruption of a respective annular discoidal sector.

The bijective mapping between the second teeth and annular discoidal sectors allows only one second tooth to act along each annular discoidal sector.

In particular, the first teeth are arranged along two first helical paths mirrored with respect to the drum centreline and the second teeth are arranged along two second helical paths mirrored with respect to the drum centreline and angularly offset by about 180° with respect to the first helical paths.

The first and second helical paths and their angular offset allow the first and second teeth to be actuated in succession.

In particular, each discoidal annular sector has an outer circumferential edge; a leading edge in contact with a respective second tooth; and a trailing edge facing and spaced apart from said respective second tooth.

The circumferential edge has the function of keeping the second teeth at a given distance from the material to be shredded, while each second tooth is housed in the interruption of the respective circumferential annular sector between the leading edge and the trailing edge.

In particular, the leading edge comprises an inclined section sloping down from the outer circumferential edge towards the drum and the respective second tooth.

This configuration allows tool access to the rear of the second tooth.

In particular, the trailing edge comprises a convex profile adjacent the outer circumferential edge and a concave profile adjacent the drum.

This configuration allows the outer profile of the discoidal annular sector to be kept close to the respective tooth, and at the same time, a working space to be defined close to the drum.

In particular, the shredder comprises two side supports, which are attached to the frame and are arranged at opposite ends of the rotor, the side supports having respective support surfaces arranged at a distance from the axis of rotation greater than the distance between the distal end of each of the first and second teeth and the axis of rotation.

In this way, the side supports allow the shredder to be supported when it is not in use, and the first and second teeth to be prevented from being kept at a minimum distance from the ground when it is in use.

In particular, the shredder comprises a first and a second casing, which are attached to the frame and are arranged around the rotor throughout the length of the rotor and at an angle greater than 90° around the rotor, the second casing being arranged at a distance from the rotor less than the distance between the rotor and the first casing and being selectively removable.

In this way, the size of the space where the organic
material is shredded can be varied. The smaller the space, the finer the shredding.

In particular, the shredder comprises a third casing, which is arranged around the rotor throughout the length of the rotor, is hinged to the frame and actuated by an actuator.

When open, the third casing has the function of limiting the working depth of the rotor with respect to organic material arranged in front of the shredder.

### BRIEF DESCRIPTION OF THE DRAWINGS

Further features and advantages of the present invention will be apparent from the following description of a nonlimiting embodiment thereof, with reference to the Figures of the attached drawings, wherein:
- Figure 1 is a perspective view, with parts removed for clarity, of a shredder in accordance with the present invention;
- Figure 2 is a sectional view, with parts removed for clarity, of the shredder in Figure 1 along the section lines II-II;
- Figure 3 is a perspective view, with parts removed for clarity, of the rotor of the shredder in Figure 1; and
- Figure 4 is an elevation view, with parts removed for clarity, of the rotor in Figure 3; and
- Figure 5 is a side elevation view, with parts removed for clarity, of the rotor in Figure 4.

### PREFERRED EMBODIMENT OF THE INVENTION

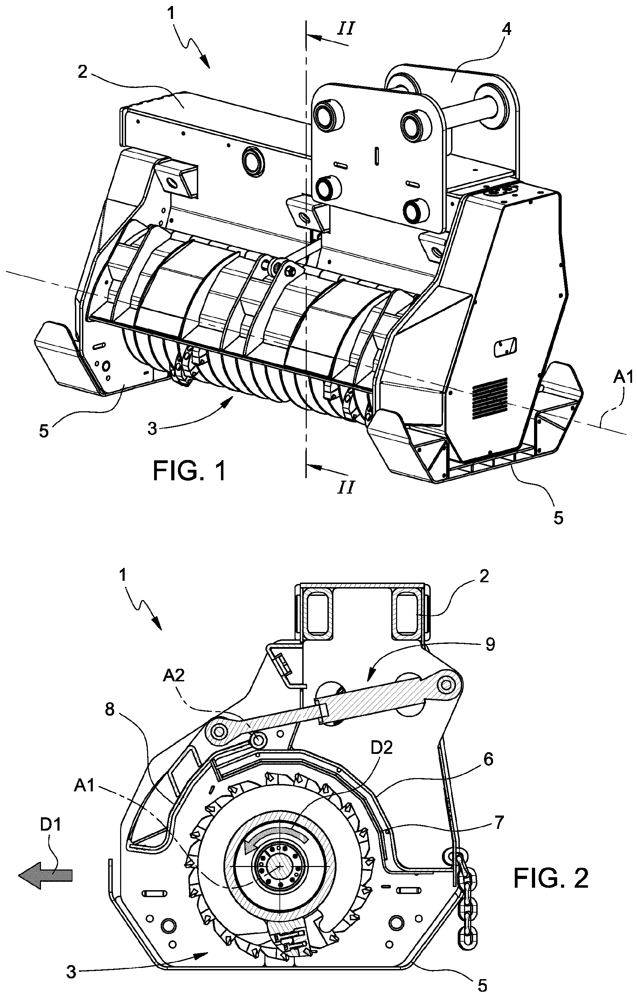

In Figure 1, reference number 1 indicates a heavy-duty shredder, particularly for use in forestry, the shredder 1 comprising a frame 2; a rotor 3 pivotably mounted on the frame about a given axis A1; and a connection 4 for connecting the shredder 1 to a vehicle, not shown. In the case shown in Figure 1, the connection 4 is arranged for connection to an articulated arm of the vehicle, not shown in the attached Figures.

The shredder 1 comprises two side supports 5, which are integral with the frame 2, are arranged at the opposite ends of the rotor 3, and are configured to keep the rotor 3 spaced apart from a flat surface supporting the shredder 1.

With reference to Figure 2, the shredder 1 comprises two casings 6 and 7, which are integral with the frame 2 and are arranged around the rotor 3 throughout the length of the rotor 3 and at an angle greater than 90° around the rotor 3. The casing 7 is arranged at a distance from the rotor 3, which is less than the distance between the rotor 3 and the casing 6, and is selectively removable.

The shredder 1 comprises a casing 8, which is arranged around the rotor 3 throughout the length of the rotor 3, is hinged to the frame 2 about an axis A2, and is actuated by an actuator 9 which, in the case shown herein, is a linear hydraulic actuator.

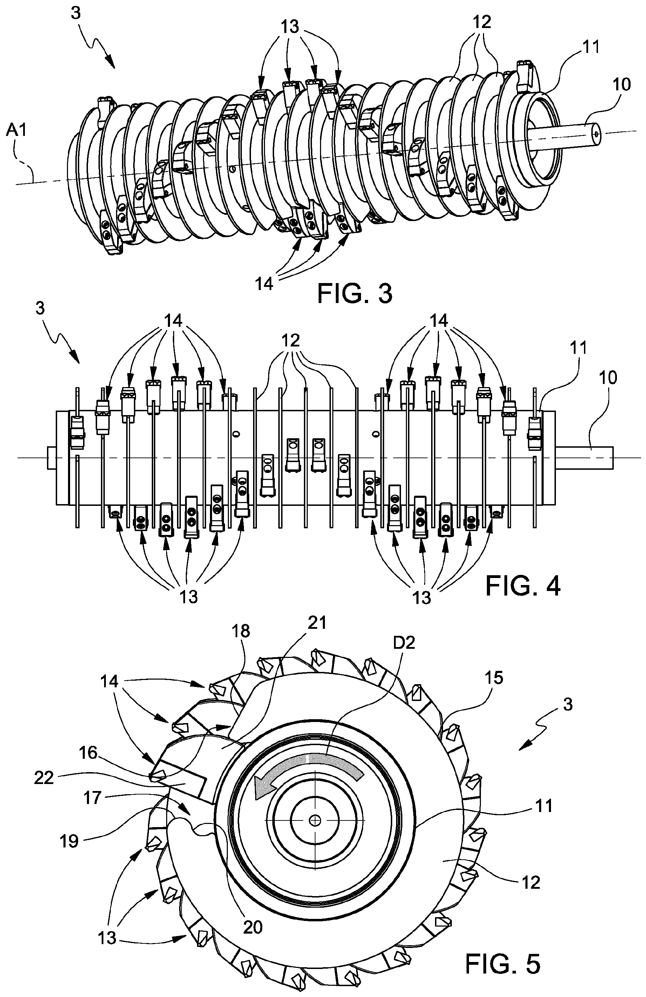

With reference to Figure 3, the rotor 3 comprises a shaft 10 that can rotate about the given axis A1; a drum 11 integral with the shaft 10 and coaxial with the given axis A1; and a plurality of annular discoidal sectors 12 extending around the drum 11, integral with the drum 11 and distributed along the given axis A1 so as to form annular cavities between the adjacent annular discoidal sectors 12.

The drum 11 comprises a plurality of teeth 13, each of which is integral with the drum 11 and is arranged in a respective cavity between two adjacent discoidal sectors 12; and a plurality of teeth 14, each of which is integral with the drum 3 and is aligned with an annular discoidal sector 12 in a circumferential direction.

In practice, each discoidal sector 12 has an interruption so as to define a compartment communicating with two adjacent annular cavities and configured to house a respective tooth 14.

The teeth 13 are arranged along two first helical paths mirrored with respect to the drum 11 centreline, and the teeth 14 are arranged along two second helical paths mirrored with respect to the drum centreline and angularly offset by 180° with respect to the first helical paths, as shown in Figures 3 and 4. Consequently, the interruptions of the discoidal sectors 12 are arranged along the two second helical paths.

With reference to Figure 5, each annular discoidal sector 12 has an outer circumferential edge 15; a leading edge 16 close to a respective tooth 14; and a trailing edge 17 facing and spaced apart from the respective tooth 14. The terms leading edge and trailing edge refer to the direction of rotation D2 of the rotor 3.

The front edge 16 comprises an inclined section 18 sloping down from the outer circumferential edge 15 towards the drum 3 and the respective tooth 14.

The trailing edge 17 comprises a convex profile 19 adjacent the outer circumferential edge 15 and a concave profile 20 adjacent the drum 3.

Each of the teeth 13 and 14 comprises a base 21 attached to the drum and an insert 22, which has a cutting profile and is selectively mountable in a seat of a respective support 21.

With reference to Figure 2, the shredder 1 is configured to be advanced in direction D1, with the side supports 5 resting on a surface along which the shredder 1 advances and finds material to be shredded, while the rotor 3 is rotated in direction D2.

The side supports 5 have respective support surfaces arranged at a distance from the axis of rotation A1 greater than the distance between the distal end of each of the teeth 14, 15 and the axis of rotation A1.

In use, the shredder 1 is advanced on the ground in direction D1 by the vehicle, not shown in the attached Figures, and the rotor 3 is rotated in direction D2 by a hydraulic motor, not shown in the attached Figures. The teeth 13 and 14 shred the organic material they encounter along the path through the impact with the cutting edge of the teeth 13 and 14. The cutting depth and width vary according to the size, shape and orientation of the organic material with respect to the annular discoidal sectors 12, the spacing of the annular discoidal sectors 12, and the position of the teeth 13 and 14 with respect to the annular discoidal sectors 12.

The shredder 1 is configured to operate raised with respect to the ground and with the casing 8 raised to operate on substantially vertical trunks.

Lastly, it is clear that the present invention encompasses further variants to the embodiments described herein, which fall within the scope of protection of the appended claims.

## Claims

1. A heavy-duty shredder, in particular for use in forestry, the shredder (1) comprising:
- a frame (2);
- a rotor (3) rotatably mounted on the frame (2) about an axis of rotation (A1) and comprising:
(i) a drum (11) coaxial to the axis of rotation (A1); and
(ii) a plurality of annular discoidal sectors (12) extending around the drum (3), integral with the drum (11) and distributed along the axis of rotation (A1) so as to form annular cavities between adjacent annular discoidal sectors (12);
the heavy-duty shredder being **characterized by** comprising a connection (4) for connecting the shredder (1) to a vehicle and the rotor (3) comprising:
(iii) a plurality of first teeth (13) integral with the drum (11) and each of them comprising a base (21) attached to the drum (11) and an insert (22), which has a cutting profile and is selectively mountable in a seat of the respective base (21) and arranged in annular cavities between two adjacent discoidal annular sectors (12); and
(iv) a plurality of second teeth (14) integral with the drum (11) and each of them comprising a base (21) attached to the drum (11) and an insert (22), which has a cutting profile and is selectively mountable in a seat of the respective base (21) and aligned with the discoidal annular sectors (12) in a circumferential direction.

2. The shredder as claimed in claim 1, wherein each first tooth (13) is arranged in a respective annular cavity.

3. The shredder as claimed in claim 1 or 2, wherein each discoidal annular sector (12) has an interruption, and each second tooth (14) is arranged in a respective interruption of a respective discoidal annular sector (12).

4. The shredder as claimed in any one of the preceding claims, wherein the first teeth (13) are arranged along two first helical paths mirrored with respect to the drum (11) centreline and the second teeth (14) are arranged along two second helical paths mirrored with respect to the drum (11) centreline and angularly offset by about 180° with respect to the first helical paths.

5. The shredder as claimed in any one of the preceding claims, wherein each discoidal annular sector (12) has an outer circumferential edge (15); a leading edge (16) in contact with a respective second tooth (14); and a trailing edge (17) facing and spaced apart from said respective second tooth (14).

6. The shredder as claimed in claim 5, wherein the leading edge (16) comprises an inclined section (18) sloping down from the outer circumferential edge (15) towards the drum (11) and the respective second tooth (14).

7. The shredder as claimed in claims 5 and 6, wherein the trailing edge (17) comprises a convex profile (19) adjacent the outer circumferential edge (15) and a concave profile (20) adjacent the drum (11).

8. The shredder as claimed in any one of the preceding claims, and comprising two side supports (5), which are attached to the frame and are arranged at opposite ends of the rotor (3), the side supports (5) having respective support surfaces arranged at a distance from the axis of rotation (A1) greater than the distance between the distal end of each of the first and second teeth (13, 14) and the axis of rotation (A1).

9. The shredder as claimed in any one of the preceding claims, and comprising a first and a second casing (6, 7), which are attached to the frame and are arranged around the rotor (3) throughout the length of the rotor (3) and at an angle greater than 90° around the rotor (3), the second casing (7) being arranged at a distance from the rotor (3) less than the distance between the rotor (3) and the first casing (6) and being selectively removable.

10. The shredder as claimed in any one of the preceding claims, and comprising a third casing (8), which is arranged around the rotor throughout the length of the rotor (3), is hinged to the frame (2) and actuated by an actuator (9).

## Patentansprüche

1. Hochleistungszerkleinerer, insbesondere für den Einsatz in der Forstwirtschaft, wobei der Zerkleinerer (1) umfasst:
- einen Rahmen (2);
- einen Rotor (3), der drehbar an dem Rahmen (2) um eine Drehachse (A1) montiert ist und Folgendes umfasst:
(i) eine zur Drehachse (A1) koaxiale Trommel (11); und
(ii) eine Vielzahl von ringförmigen scheibenförmigen Sektoren (12), die sich um die Trommel (3) erstrecken, einstückig mit der Trommel (11) und entlang der Drehachse (A1) verteilt sind, um ringförmige Hohlräume zwischen angrenzenden ringförmigen scheibenförmigen Sektoren (12) zu bilden;
wobei der Hochleistungszerkleinerer **dadurch gekennzeichnet ist, dass** er eine Verbindung (4) zum Verbinden des Zerkleinerers (1) mit einem Fahrzeug umfasst und wobei der Rotor (3) Folgendes umfasst:
(iii) eine Vielzahl von ersten Zähnen (13), die mit der Trommel (11) einstückig sind und jeweils eine Basis (21), die an der Trommel (11) befestigt ist und einen Einsatz (22) umfassen, der ein Schneidprofil aufweist und selektiv in einem Sitz der jeweiligen Basis (21) montierbar und in ringförmigen Hohlräumen zwischen zwei angrenzenden scheibenförmigen ringförmigen Sektoren (12) angeordnet ist; und
(iv) eine Vielzahl von zweiten Zähnen (14), die mit der Trommel (11) einstückig sind und jeweils eine Basis (21), die an der Trommel (11) befestigt ist, und einen Einsatz (22) umfassen, der ein Schneidprofil aufweist und selektiv in einem Sitz der jeweiligen Basis (21) montierbar und mit den scheibenförmigen ringförmigen Sektoren (12) in einer Umfangsrichtung ausgerichtet ist.

2. Zerkleinerer nach Anspruch 1, wobei jeder erste Zahn (13) in einem jeweiligen ringförmigen Hohlraum angeordnet ist.

3. Zerkleinerer nach Anspruch 1 oder 2, wobei jeder scheibenförmige ringförmige Sektor (12) eine Unterbrechung aufweist und jeder zweite Zahn (14) in einer jeweiligen Unterbrechung eines jeweiligen scheibenförmigen ringförmigen Sektors (12) angeordnet ist.

4. Zerkleinerer nach einem der vorhergehenden Ansprüche, wobei die ersten Zähne (13) entlang zweier erster schraubenförmiger Pfade angeordnet sind, die in Bezug auf die Mittellinie der Trommel (11) gespiegelt sind, und die zweiten Zähne (14) entlang zweier zweiter schraubenförmiger Pfade angeordnet sind, die in Bezug auf die Mittellinie der Trommel (11) gespiegelt sind und in Bezug auf die ersten schraubenförmigen Pfade um etwa 180° winkelversetzt sind.

5. Zerkleinerer nach einem der vorhergehenden Ansprüche, wobei jeder scheibenförmige ringförmige Sektor (12) eine äußere Umfangskante (15); eine Vorderkante (16) in Kontakt mit einem jeweiligen zweiten Zahn (14); und eine Hinterkante (17) aufweist, die dem jeweiligen zweiten Zahn (14) zugewandt und von diesem beabstandet ist.

6. Zerkleinerer nach Anspruch 5, wobei die Vorderkante (16) einen geneigten Abschnitt (18) umfasst, der von der äußeren Umfangskante (15) in Richtung der Trommel (11) und des jeweiligen zweiten Zahns (14) abfällt.

7. Zerkleinerer nach Anspruch 5 und 6, wobei die Hinterkante (17) ein konvexes Profil (19) angrenzend an die äußere Umfangskante (15) und ein konkaves Profil (20) angrenzend an die Trommel (11) umfasst.

8. Zerkleinerer nach einem der vorhergehenden Ansprüche, und umfassend zwei Seitenstützen (5), die an dem Rahmen befestigt und an gegenüberliegenden Enden des Rotors (3) angeordnet sind, wobei die Seitenstützen (5) jeweilige Stützflächen aufweisen, die in einem Abstand von der Drehachse (A1) angeordnet sind, der größer als der Abstand zwischen dem distalen Ende jedes der ersten und zweiten Zähne (13, 14) und der Drehachse (A1) ist.

9. Zerkleinerer nach einem der vorhergehenden Ansprüche, und umfassend ein erstes und ein zweites Gehäuse (6, 7), die an dem Rahmen befestigt sind und um den Rotor (3) herum über die gesamte Länge des Rotors (3) und in einem Winkel von mehr als 90° um den Rotor (3) herum angeordnet sind, wobei das zweite Gehäuse (7) in einem Abstand von dem Rotor (3) angeordnet ist, der kleiner als der Abstand zwischen dem Rotor (3) und dem ersten Gehäuse (6) ist, und selektiv entfernbar ist.

10. Zerkleinerer nach einem der vorhergehenden Ansprüche, und umfassend ein drittes Gehäuse (8), das über die gesamte Länge des Rotors (3) um den Rotor herum angeordnet ist, gelenkig mit dem Rahmen (2) verbunden ist und durch einen Aktuator (9) betätigt wird.

## Revendications

1. Broyeur à usage intensif, en particulier pour un usage forestier, le broyeur (1) comprenant :
- un châssis (2) ;
- un rotor (3) monté sur le châssis (2) de manière rotative autour d'un axe de rotation (A1) et comprenant :
(i) un tambour (11) coaxial à l'axe de rotation (A1) ; et
(ii) une pluralité de secteurs discoïdaux annulaires (12) s'étendant autour du tambour (3), solidaires du tambour (11) et répartis le long de l'axe de rotation (A1) de manière à former des cavités annulaires entre des secteurs discoïdaux annulaires (12) adjacents ;
le broyeur à usage intensif étant **caractérisé en ce qu'**il comprend un raccord (4) pour relier le broyeur (1) à un véhicule et **en ce que** le rotor (3) comprend :
(iii) une pluralité de premières dents (13) solidaires du tambour (11) et comprenant chacune une base (21) fixée au tambour (11) et un insert (22) ayant un profil de coupe et pouvant être monté sélectivement dans un siège de la base (21) respective et disposé dans des cavités annulaires entre deux secteurs annulaires discoïdaux (12) adjacents ; et
(iv) une pluralité de secondes dents (14) solidaires du tambour (11) et comprenant chacune une base (21) fixée au tambour (11) et un insert (22) ayant un profil de coupe et pouvant être monté sélectivement dans un siège de la base (21) respective et aligné avec les secteurs annulaires discoïdaux (12) dans une direction circonférentielle.

2. Broyeur selon la revendication 1, dans lequel chaque première dent (13) est disposée dans une cavité annulaire respective.

3. Broyeur selon la revendication 1 ou 2, dans lequel chaque secteur annulaire discoïdal (12) présente une interruption, et chaque seconde dent (14) est disposée dans une interruption respective d'un secteur annulaire discoïdal (12) respectif.

4. Broyeur selon l'une quelconque des revendications précédentes, dans lequel les premières dents (13) sont disposées le long de deux premières trajectoires hélicoïdales en miroir par rapport à l'axe central du tambour (11) et les secondes dents (14) sont disposées le long de deux secondes trajectoires hélicoïdales en miroir par rapport à l'axe central du tambour (11) et décalées angulairement d'environ 180° par rapport aux premières trajectoires hélicoïdales.

5. Broyeur selon l'une quelconque des revendications précédentes, dans lequel chaque secteur annulaire discoïdal (12) présente un bord circonférentiel extérieur (15), un bord d'attaque (16) en contact avec une seconde dent (14) respective ; et un bord de fuite (17) faisant face à ladite seconde dent (14) respective et espacé de celle-ci.

6. Broyeur selon la revendication 5, dans lequel le bord d'attaque (16) comprend une section inclinée (18) descendant du bord circonférentiel extérieur (15) vers le tambour (11) et la seconde dent (14) respective.

7. Broyeur selon les revendications 5 et 6, dans lequel le bord de fuite (17) comprend un profil convexe (19) adjacent au bord circonférentiel extérieur (15) et un profil concave (20) adjacent au tambour (11).

8. Broyeur selon l'une quelconque des revendications précédentes, comprenant deux supports latéraux (5), qui sont fixés au châssis et sont disposés aux extrémités opposées du rotor (3), les supports latéraux (5) ayant des surfaces d'appui respectives disposées à une distance de l'axe de rotation (A1) supérieure à la distance entre l'extrémité distale de chacune des première et seconde dents (13, 14) et l'axe de rotation (A1).

9. Broyeur selon l'une quelconque des revendications précédentes, comprenant un premier et un second carter (6, 7), qui sont fixés au châssis et sont disposés autour du rotor (3) sur toute la longueur du rotor (3) et à un angle supérieur à 90° autour du rotor (3), le second carter (7) étant disposé à une distance du rotor (3) inférieure à la distance entre le rotor (3) et le premier carter (6) et étant sélectivement amovible.

10. Broyeur selon l'une quelconque des revendications précédentes, comprenant un troisième carter (8), qui est disposé autour du rotor sur toute la longueur du rotor (3), est articulé sur le châssis (2) et actionné par un vérin (9).
